# EUROPEAN PATENT APPLICATION

(11) **EP 2 874 108 A1**
(43) Date of publication of application: **20.05.2015**
(21) Application number: 13290281.8
(22) Date of filing: 13.11.2013
(51) Int. Cl.: G06Q 10/02

(54) **Low cost travel ticketing**

(71) Applicant: Amadeus S.A.S., 06410 Biot (FR)
(72) Inventor: Regnault, Julien, 06130 Grasse (FR); Geoffroy, Emmanuelle, 06140 Tourrettes-sur-Loup (FR); Epiard, Damien, 06400 Cannes (FR); Ramon, Carolina, 06000 Nice (FR); Le Marier, Mathieu, 06600 Antibes (FR)
(74) Representative: Samson & Partner Patentanwälte mbB

(57) **Abstract**

Methods, systems, and computer program products for managing low cost carrier travel inventory items. A booking request for a travel record is received at a reservation system. Responsive to determining that the booking request corresponds to a travel inventory item of a low cost carrier, a light ticketing document number is generated for the travel inventory item based at least in part on the low cost carrier and a type of the travel inventory item. A transaction request including form of payment information and contact information is communicated to a low cost carrier inventory system for the travel inventory item. Responsive to a transaction response received from the low cost carrier inventory system indicating successful booking and successful payment for the travel inventory item, the travel record is updated to include a confirmed booking for the travel inventory item including the light ticketing document number.

## Description

### BACKGROUND

The invention is generally related to computers and computer software, and in particular to methods, systems, and computer program products for managing low cost travel ticketing.

Computer technology is increasingly used in the travel industry to manage and support travel reservations, as well as data associated therewith. In particular, third party reservation agents, such as travel agents, and/or customers (e.g., travelers) often utilize computer based devices to interface with a reservation system, such as a Global Distribution System (GDS), to book travel arrangements and/or travel related services for the customer. When reserving travel related services using such reservation terminals in communication with such 1 reservation systems, a travel agent and/or customer may initiate a reservation session between a reservation terminal and the reservation system to book one or more travel inventory items corresponding to the travel related services (e.g., flights, hotels, rail transportation, dining reservations, etc.) for a customer during the reservation session. After reservation of travel inventory items, reservation systems may manage ticketing information for the reserved travel inventory items.

As computer technology is utilized to increasingly manage and support travel reservations, a continuing need exists in the art for improved computer based travel reservation systems, as well as methods and computer program products, for facilitating travel related service booking.

### BRIEF SUMMARY

Embodiments of the invention generally comprise a method, system, and computer program product for managing travel inventory items of low cost carriers. Consistent with embodiments of the invention, a booking request associated with a passenger name record may be received at a reservation system. In response to determining that the booking request corresponds to a travel inventory item of a low cost carrier, a light ticketing document number associated with the travel inventory item is generated based at least in part on an identity of the low cost carrier and a type associated with the travel inventory item. A transaction request for the travel inventory item may be communicated to an inventory system of the low cost carrier, where the transaction request includes form of payment information and contact information. In response to a transaction response received from the inventory system of the low cost carrier indicating a successful reservation and a successful payment for the travel inventory item, the passenger name record is updated to include a confirmed booking for the travel inventory item including the light ticketing document number and an approval code corresponding to form of payment information.

### BRIEF DESCRIPTION OF THE SEVERAL VIEWS OF THE DRAWINGS

The accompanying drawings, which are incorporated in and constitute a part of this specification, illustrate various embodiments of the invention and, together with a general description of the invention given above and the detailed description of the embodiments given below, serve to explain the embodiments of the invention.
FIG. 1 is a block diagram of one or more reservation systems, inventory systems, and travel reservation devices consistent with embodiments of the invention.
FIG. 2 is a block diagram of a reservation system of FIG. 1.
FIG. 3 is a flowchart that illustrates a sequence of operations that may be performed by at least one processor of the reservation system of FIG. 2.
FIG. 4 is a flowchart that illustrates a sequence of operations that may be performed by at least one processor of the reservation system of FIG. 2.
FIG. 5 is a flowchart that illustrates a sequence of operations that may be performed by at least one processor of the reservation system of FIG. 2.
FIG. 6 is an example routine in the form of a sequence diagram that may be performed by the reservation system, at least one travel reservation device, and at least one low cost carrier inventory system of FIG. 1.
FIG. 7 is a block diagram of an example PNR that may be processed by the reservation system of FIG. 2 during a reservation session to book at least one low cost travel inventory item.
FIG. 8 is a block diagram of the example PNR of FIG. 7 that has been updated by the reservation system of FIG. 2 after booking the at least one low cost travel inventory item.
FIG. 9 is a block diagram of an example PNR that may be processed by the reservation system of FIG. 2 during a reservation session to reissue at least one low cost travel inventory item.
FIG. 10 is an example routine in the form of a sequence diagram that may be performed by the reservation system, at least one travel reservation device, and at least one low cost carrier inventory system of FIG. 1.
FIG. 11 is a block diagram of an example PNR that may be processed by the reservation system of FIG. 2 during a reservation session in which a link down to time out occurred while booking a low cost travel inventory item.

### DETAILED DESCRIPTION

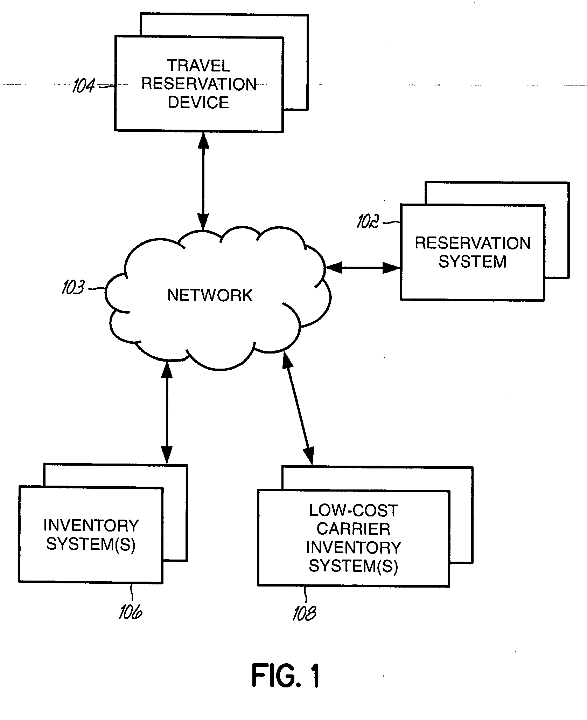

Embodiments of the invention provide a system, method, and computer program product for managing and ticketing travel inventory items provided by low cost carriers. Referring to FIG. 1, this figure provides a block diagram illustrating the one or more devices and/or systems consistent with embodiments of the invention. In general, a low cost carrier corresponds to a travel provider (such as an airline) that provides discount or budget fares with fewer services and/or comforts (e.g., Southwest Airlines, EasyJet, Frontier Airlines, etc.). Based at least in part on the lower cost nature of the travel provider, inventory systems associated with such low cost carriers may limit transactions for reserving travel inventory items to support a lower cost business model utilized by the low cost carrier. For example, a travel inventory item provided by a low cost carrier (i.e., a low cost travel inventory item) may be reserved in a transaction that requires payment to be successful to complete the reservation. For the low cost carrier, no documents are issued, and the contract between the passenger and the low cost carrier may be emailed to the passenger. In general, this booking process differs from the standard booking process employed by standard travel merchants that interface with a reservation system.

As shown in FIG. 1, a reservation system 102 may be implemented as one or more servers. The reservation system 102 may be connected to a communication network 103, where the communication network 103 may comprise the Internet, a local area network (LAN), a wide area network (WAN), a cellular voice/data network, one or more high speed bus connections, and/or other such types of communication networks. A travel reservation device 104 may be connected to the communication network 103, such that a reservation agent (e.g., travel agency, traveler, or other such travel reservation service) may initialize a reservation session with the reservation system 102 to communicate a booking request and/or other such relevant data to the reservation system 102. The travel reservation device 104 may be a personal computing device, tablet computer, thin client terminal, smart phone and/or other such computing device.

One or more servers for one or more inventory systems 106 of one or more travel merchants and one or more low cost carrier inventory systems 108 are connected to the communication network 103. The reservation system 102 may initialize an inventory session over the communication network 103 with each inventory system 106 and/or low cost carrier inventory system 108 for which a travel inventory item is to be booked. Consistent with embodiments of the invention, a reservation agent may interface with the reservation system 102 using the travel reservation device 104 in a reservation session to provide data for a booking request. In turn, the reservation system interfaces with each inventory system 106 of each travel merchant and/or low cost carrier inventory system 108 that provides a travel inventory item needed for the booking request in an inventory session. Moreover, while the reservation system 102, inventory system 106, and/or low cost carrier inventory system 108 are described herein as separate entities, the invention is not so limited. In some embodiments, various hardware, software components, and/or sequences of operations described with respect to the reservation system 102, inventory system 106, and/or low cost carrier inventory system 108 may be implemented on the reservation system 102, inventory system 106, and/or low cost carrier inventory system 108. Furthermore, as will be appreciated, in some embodiments the reservation system 102, inventory system 106, and/or low cost carrier inventory system 108 may be components of a GDS.

As discussed, a low cost carrier inventory system 108 may interface with the reservation system 102 in a limited reservation session as compared to an inventory system 106 corresponding to a standard travel provider (i.e., a non-low cost carrier), where the limited reservation session generally corresponds to a limited number of transaction types supported by the low cost carrier inventory system 108. For example, when interfacing with the reservation system 102, the low cost carrier inventory system 108 may recognize one or more terms of a transaction request (e.g., a commit request) communicated to the low cost carrier inventory system 108. Such terms may include, for example: a commit verb that may be used to create a reservation (i.e., book one or more low cost travel inventory items) in the low cost carrier inventory system 108, a get booking status verb that may be used to check the status of a reservation in the low cost carrier inventory system 108, and/or a recommit verb that may be used to update an existing reservation in the low cost carrier inventory system 108.

Similarly, the outcome of a reservation session for low cost carrier inventory system 108 (i.e., the booking of a travel inventory item of a low cost carrier) generally differs from the outcome of a reservation session for a standard inventory system 106. For example, low cost carriers generally provide "ticketless travel", where an International Air Transport Association (IATA) ticket number is not assigned for a booked low cost travel inventory item, and contract documents are not communicated to the reservation system 102 but are instead communicated to an email address of the traveler. Furthermore, the low cost carrier inventory system 108 may communicate only a record locator to a requesting system, where the record locator corresponds to a reservation record stored in the low cost carrier inventory system 108 for one or more reserved low cost travel inventory items. In addition, the types of transactions that a low cost carrier inventory system may process are limited based in part on the low cost model of the low cost carrier. For example, a low cost carrier inventory system 108 may include one or more terms in a response to a transaction request. Such terms may include, for example: a successful reply that indicates that a reservation has been created/updated in the low cost carrier inventory system 108 and payment authorization has been received, a failing reply that indicates that a requested reservation has not been created in the low cost carrier inventory system 108, and/or a pending reply that indicates that the low cost carrier inventory system 108 has not yet received a payment authorization status such that the reservation is not yet complete.

In some conventional systems, due to the differences between reservation sessions for the standard inventory system 106 and the low cost carrier inventory system 108, these conventional reservation systems may not be able to interface with both standard inventory systems 106 and low cost carrier inventory systems 108. Therefore, when booking low cost travel inventory items, a reservation agent may resort to separately reserving travel inventory items of low cost carriers (i.e., low cost travel inventory items) through a dedicated interface, such as an interface provided by a dedicated internet website. Separately booking such low cost travel inventory items may lead to further difficulty managing reservations, since travel inventory items not booked using the reservation system may not be available for the travel agent to modify, cancel, rebook, etc. by interfacing with the reservation system 102 using a travel reservation device 104. In addition, since the booking of low cost travel inventory items may not be performed by a conventional reservation system, reservation and sales related information for booked low cost travel inventory items for reservation agents may not be available to the conventional reservation system for collection, analysis, sales reporting, and payment reconciliation (e.g., credit card reconciliation).

A reservation system 102 consistent with some embodiments of the invention, however, may be configured to interface with standard inventory systems 106 as well as low cost carrier inventory systems 108 to reserve travel inventory items and/or low cost travel inventory items. Moreover, these embodiments of the invention may be configured manage reserved travel inventory items and/or low cost travel inventory items. Therefore, any differences between managing and reserving standard travel inventory items and reserving and managing low cost travel inventory items may appear transparent to a reservation agent using a travel reservation device 104 to interface with a reservation system 102 consistent with embodiments of the invention. Moreover, a reservation system 102 consistent with embodiments of the invention may collect and report reservation and sales related information for reserved low cost travel inventory items for a reservation agent in addition to reserved standard travel inventory items. Therefore, embodiments of the invention provide a reservation system that includes an integrated interface that facilitates the reservation and management of standard travel inventory items and low cost travel inventory items.

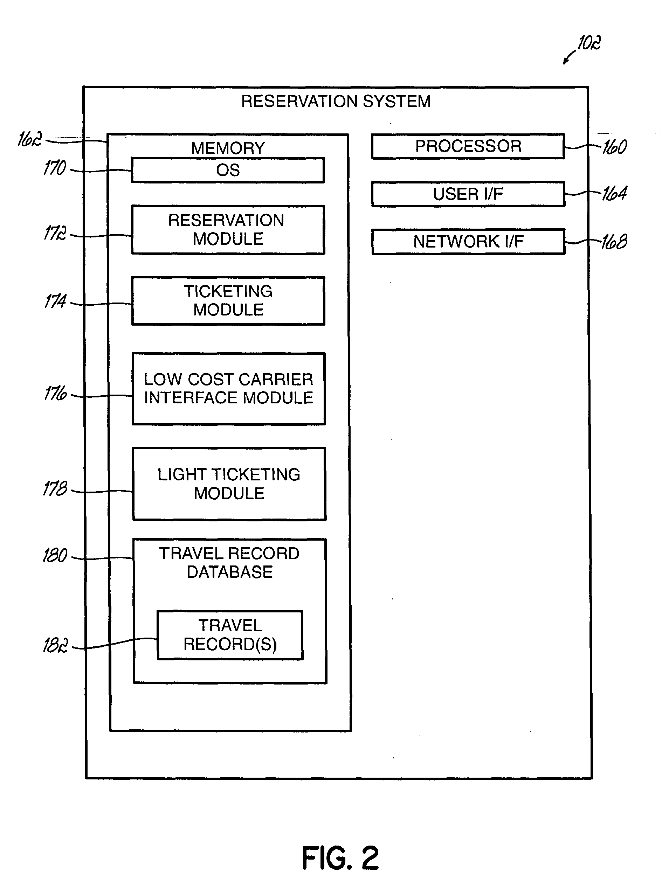

Turning now to FIG. 2, this figure provides a block diagram that illustrates the components of the one or more servers of the reservation system 102. The reservation system 102 includes at least one processor 160 including at least one hardware-based microprocessor and a memory 162 coupled to the at least one processor 160. The memory 162 may represent the random access memory (RAM) devices comprising the main storage of reservation system 102, as well as any supplemental levels of memory, e.g., cache memories, non-volatile or backup memories (e.g., programmable or flash memories), read-only memories, etc. In addition, memory 162 may be considered to include memory storage physically located elsewhere in the reservation system 102, e.g., any cache memory in a microprocessor, as well as any storage capacity used as a virtual memory, e.g., as stored on a mass storage device or on another computer coupled to the reservation system 102.

For interface with a user or operator, the reservation system 102 may include a user interface 164 incorporating one or more user input/output devices, e.g., a keyboard, a pointing device, a display, a printer, etc. Otherwise, input may be received via another computer or terminal (e.g., the inventory system 106, the low cost carrier inventory system 108, and/or the travel reservation device 104) over a network interface 168 coupled to the communication network 103. The reservation system 102 also may be in communication with one or more mass storage devices, which may be, for example, internal hard disk storage devices, external hard disk storage devices, external databases, storage area network devices, etc.

The reservation system 102 typically operates under the control of an operating system 170 and executes or otherwise relies upon various computer software applications, components, programs, objects, modules, engines, data structures, etc., including for example, a reservation module 172, a ticketing module 174, a low cost carrier interface module 176, and a light ticketing module 178. In general, the reservation module 172 may be configured to generate a reserved travel booking based on received booking data. The reservation module 172 may receive booking data from a travel reservation device 104, and the reservation module 172 may interface with one or more inventory systems 106 and/or low cost carrier inventory systems 108 to reserve travel inventory items managed by the inventory systems 1 06/low cost carrier inventory systems 108. The ticketing module 174 may be generally configured to issue a travel ticket for a reserved travel booking. The low cost carrier interface module 176 is generally configured to format transaction requests and responses between the reservation system 102 and a low cost carrier inventory system. The light ticketing module 178 is generally configured to issue tickets and manage reservations for low cost travel inventory items. Moreover, various applications, components, programs, objects, modules, etc. may also execute on one or more processors in another computer coupled to the reservation system 102 via the communication network 103, e.g., in a distributed or client-server computing environment, whereby the processing required to implement the functions of a computer program may be allocated to multiple computers over a network. For example, some of the functionality described herein as being incorporated into a travel and reservation system 102 may be implemented in one or more servers.

The memory 162 may generally store one or more data structures including for example a travel record database 180. The travel record database 180 may store collected data for booking transactions in travel records 182, where the collected data may be organized by passenger, reservation agent, reservation session, and/or other such parameters. In general, the collected data of a travel record 182 may include one or more bookings for travel items and/or low cost travel inventory items for a particular passenger/customer. For example, a travel record 182 may include a booking for one or more flights for the passenger. In some embodiments a travel record 182 may comprise a passenger name record (PNR) associated with one or more passengers.

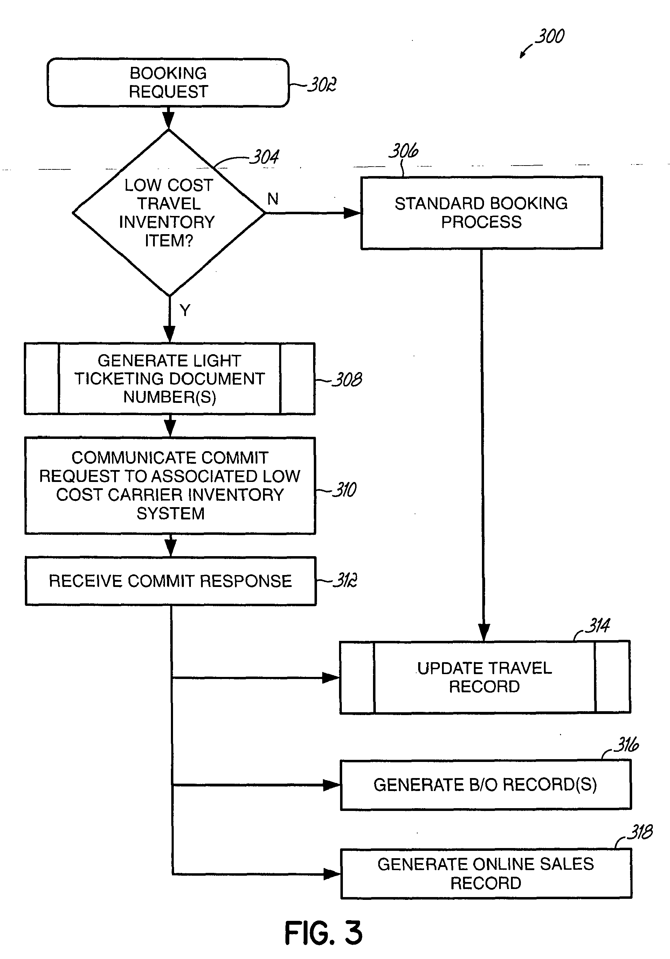

FIG. 3 provides a flowchart 300 that illustrates a sequence of operations that may be performed by the reservation system 102 of FIG. 2 consistent with embodiments of the invention. The reservation system 102 may receive a booking request associated with a passenger name record (PNR) (block 302). In general, a booking request may indicate one or more travel inventory items as well as a geographical and time constraint for each travel inventory item. For example, the booking request may indicate that a passenger associated with the PNR desires a flight (a travel inventory item), between an origin and destination (geographical constraint), that departs on a particular date and returns on a particular date (time constraint) as well as a hotel room (type of travel inventory item) at the destination (geographical constraint) for one or more days (time constraint). Furthermore, one or more of the travel inventory items of the booking request may correspond to at least one travel inventory item of a low cost carrier (i.e., a low cost travel inventory item).

The reservation system 102 may analyze the booking request to determine whether the booking request corresponds to a travel inventory item of a low cost carrier (block 304). Consistent with embodiments of the invention, if the booking request does not correspond to any low cost carriers ("N" branch of block 304), the reservation system 102 may process the booking request in a standard reservation session by interfacing with one or more standard (i.e., not low cost carrier) inventory systems 106 (block 306). If the booking request includes a request for one or more low cost travel inventory items ("Y" branch of block 304), the reservation system generates a light ticketing document number by passenger for each low cost travel inventory item group of items (block 308).

As discussed above, in general, ticketing information (such as a unique ticketing number) may not be communicated to a reservation system 102 from low cost carrier inventory systems 108 when booking low cost travel inventory items. In contrast, standard booked travel inventory items generally are issued a ticketing number by the IATA. Without corresponding ticketing information for booked low cost travel inventory items, managing booked low cost travel inventory items and associated sales and reservation information with a conventional reservation system may not be possible. As such, embodiments of the invention may generate a light ticketing document number for each low cost travel inventory item by which to track and/or manage a reserved low cost travel inventory item in a manner similar to tracking and management of booked standard travel inventory items. A generated light ticketing document number for a booked low cost travel inventory item may be similar in format to a ticketing number provided by the IATA for a booked standard travel inventory item. Consistent with embodiments of the invention, the light ticketing document number may be generated based at least in part on a type associated with the low cost travel inventory item (e.g., a flight, a lodging reservation, a service, etc.). Furthermore, the light ticketing document number may be generated based at least in part on the low cost carrier providing the low cost travel inventory item. For example, in some embodiments of the invention, at least a portion of the generated light ticketing document number is based at least in part on a low cost carrier airline that is providing a low cost flight.

The reservation system communicates a commit request for each low cost travel inventory item to an associated low cost carrier inventory system (block 310). Consistent with embodiments of the invention, the commit request may include form of payment information and contact information for a traveler. As discussed, the types of transactions that may be supported by a low cost carrier inventory system 108 are generally fewer than supported by a standard inventory system 106. Particularly, a low cost carrier inventory system 108 may require payment for a low cost travel inventory item concurrent with an availability determination and booking. Therefore, in some embodiments of the invention, the reservation system 102 may communicate form of payment information and contact information in the commit request. Since payment information and contact information may be required concurrent with booking, during a reservation session between the reservation system 102 and a travel reservation device 104, the reservation agent may be informed of such requirements via an interface displayed on the travel reservation device 104.

After communicating one or more commit requests, the reservation system 102 may receive a commit response from any low cost carrier inventory systems to which a commit request was communicated (block 312). A received commit response from a low cost carrier inventory system may indicate whether a low cost travel inventory item was successfully booked, where successful booking for a low cost travel inventory item generally corresponds to a successful reservation of the low cost travel inventory item and a successful payment for the low cost travel inventory item. The reservation system 102 may update a travel record associated with the traveler, such as the PNR, to include a confirmed booking for the low cost travel inventory item, where the confirmed booking includes the light ticketing document number associated with the low cost travel inventory item (block 314). In addition, if any standard travel inventory items may be booked during the reservation session (i.e., from block 306), the travel record may be updated accordingly.

As discussed, responsive to a transaction request of the reservation system 102, a transaction response from the low cost carrier inventory system 108 may include one of three replies: a successful reply, a failing reply, or a pending reply. Accordingly, the reservation
system 102 may update the travel record (i.e., block 314 of FIG. 3) based at least in part on the reply of the transaction response. Moreover, the reservation system 102 may generate a back office record corresponding to the completed transaction for the low cost travel inventory item
that includes the light ticketing document number, an indicator that indicates that the back office record corresponds to a low cost travel inventory item, form of payment/approval information, and/or information associated with the booked low cost travel inventory item (block 316). A
back office record may generally be communicated to a back office system utilized to track sales and accounting information. For example, a back office system that may process such back office records is the Amadeus Interface Record Back Office, provided by Amadeus IT Holding S.A., a corporation of Spain. Other similar back office systems may be utilized as well.

In addition, the reservation system 102 may generate an online sales record that includes the light ticketing document number, form of payment/approval information, and/or information associated with the booked low cost travel inventory item (block 318). Based on the generated online sales record a travel agent may track the booking of low cost travel inventory items. Moreover, the travel agent may utilize an online sales report interface to generate one or more documents corresponding to the booked low cost travel inventory item of the online sales record, including for example, an agent coupon, audit coupon, and/or a credit card charge form. Such documents may be required in one or more countries, and therefore embodiments of the invention facilitate seamless integration of low cost travel inventory item reservation by generating any required documentation.

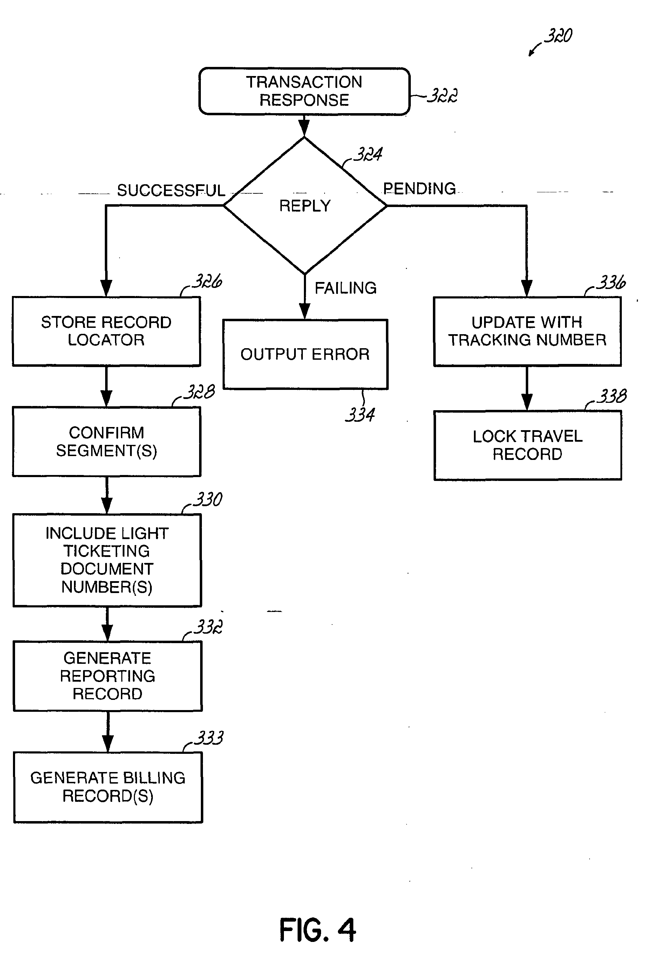

FIG. 4 provides a flowchart 320 that illustrates a sequence of operations that may be performed by the reservation system consistent with embodiments of the invention to process a transaction response. As shown, the reservation system 102 receives the transaction response (e.g., a commit response, a response to a get booking status request, a response to a recommit request, etc.) (block 322). Based on the reply (e.g., 'SUCCESSFUL', 'FAILING', OR PENDING') of the response (block 324), the reservation system may update the travel record and/or PNR accordingly. If the transaction response includes a successful reply ('SUCCESSFUL' branch of block 324), the reservation system may store a record locator that is indicated by the transaction response in the travel record (block 326), and the reservation system may update the booking status of one or more segments of the low cost travel inventory item to confirmed in the travel record (block 328). Furthermore, one or more light ticketing document numbers may be included in the travel record (block 330), and a back office reporting record and/or data may be generated for accounting and sales tracking based on the booked low cost travel inventory item, the light ticketing document number, and/or other such relevant data (block 332). In addition a billing record that includes the light ticketing document number and form of payment/approval information may be generated for processing a financial transaction associated with the booked low cost travel inventory item (block 333).

If the transaction response includes a failing reply ('FAILING' branch of block 324), the reservation system 102 may communicate an error to a travel reservation device 104 associated with the transaction request (block 334). Therefore, in this scenario, the reservation system 102 may not update the travel record. If the transaction response includes a pending reply ('PENDING' branch of block 324), the reservation system 102 may update the travel record with a tracking number that corresponds to the transaction request (block 336). In some embodiments, the tracking number may correspond to the light ticketing document number. Moreover, this tracking number facilitates later checking of the status of the transaction such that if a time out or link down has occurred, the reservation system 102 may be able to query the low cost carrier inventory system regarding the status of the transaction request. Furthermore, the reservation system 102 may lock the travel record (block 338) such that other transactions may not be performed for the travel record until resolution of the transaction request associated with the tracking number. Locking a travel record, such as a PNR, pending resolution of a transaction (i.e., receiving a transaction response for a transaction request) may improve interfacing between the reservation system 102, the travel reservation device 104, and/or the low cost carrier inventory system 108. For example, locking the travel record (e.g., the PNR) may be implemented by the reservation system 102 to address undesirable actions by a reservation agent attempting to manipulate the reservation system 102 and/or reservation session. As another example, locking the travel record may be implemented to provide a mechanism to address system outages for the low cost carrier inventory system 108. Consistent with embodiments of the invention, the locked travel record may limit the reservation system 102 to only communicating a get booking status request for the travel record to the low cost carrier inventory system 108 such that the transaction may be resolved before other transactions may be initiated for the travel record. Moreover, limiting the permitted action to only communicating a get booking status request may be utilized to confirm that the travel record (e.g., the PNR) has not changed since the commit request.

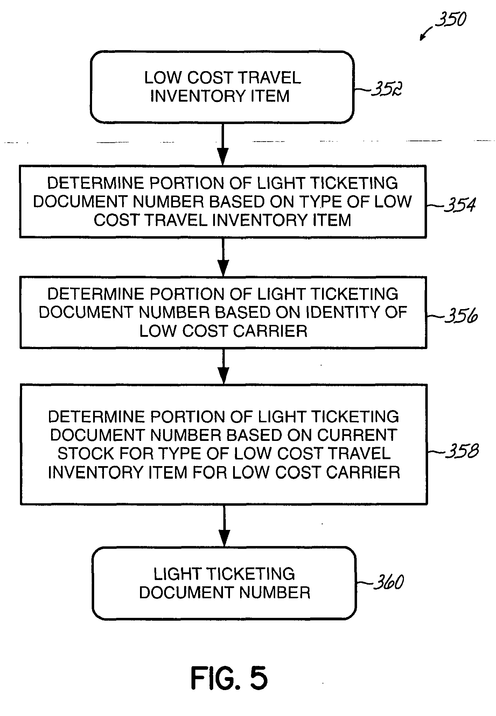

FIG. 5 provides a flowchart that illustrates a sequence of operations that may be performed by the reservation system 102 to generate a light ticketing document number consistent with embodiments of the invention. As shown, the reservation system 102 may process a low cost travel inventory item requested in a received booking request (block 352). The reservation system 102 may determine at least a portion of the light ticketing document number based at least in part on a type that is associated with the low cost travel inventory item (block 354). For example, a portion of a generated light ticketing document number may be generated based on whether the low cost travel inventory item is a flight, a service, etc. Furthermore, the reservation system 102 may generate at least a portion of the light ticketing document number based at least in part on an identity of the low cost carrier (block 356). For example, a portion of a generated light ticketing document number may be generated based on the low cost carrier airline that is providing a flight. The reservation system 102 may generate at least a portion of the light ticketing document number based at least in part on current stock allocation for the type of low cost travel inventory item for the low cost carrier (block 358). For example, the reservation system may sequentially number flights of a particular low cost carrier. Based at least in part on the type of the low cost travel inventory item, the identity of the low cost carrier, and the current stock allocation for the type of the travel inventory item for the low cost carrier, the reservation system 102 generates the light ticketing document number (block 360).

As an example, a light ticketing document number may comprise 10 digits, where two digits may correspond to a type associated with the low cost travel inventory item, two digits may correspond to the low cost carrier (i.e., the identity of the low cost carrier), and six digits may correspond to sequentially assigned numbers based on stock allocation (e.g., the values '000001' to '999999'). In general, the sequentially assigned numbers based on stock allocation may reset upon booking a low cost travel inventory item after the last value in the range. In this example, the last value in the range would be '999999' and the next booked low cost travel inventory item of the same type for the same low cost carrier would have sequentially numbered portion corresponding to '000001'. Continuing the example, a low cost flight may be assigned the two digit value of '24' and a service associated with the low cost flight (i.e., a low cost service, such as a baggage fee) may be assigned the two digit value of '82'. In general, the two digit codes '24' and '82' should be appreciated as standard airline form codes. A first low cost carrier airline may be assigned the two digit value of '01', and a second low cost carrier airline may be assigned the two digit value of '02'. In the context of this example, a light ticketing document number generated for a first booked low cost flight for the first low cost airline would have a value of '2401000001', where the leading two digits, '24', indicates a flight, the following two digits indicate that the low cost carrier is the first low cost airline, and the last six digits correspond to the currently allocated flights for the first low cost airline. If a second low cost flight is booked for the first airline, the light ticketing document number generated would be '2401000002'. Similarly, if a generated light ticketing document number for a booked low cost flight for the second low cost airline is '2402999999', the light ticketing document number generated for a low cost flight booked subsequently for the second low cost airline would be '2402000001'. Moreover, if a low cost carrier airline becomes a billing and settlement plan (BSP) user, ticketing document numbers generated by the IATA would be assigned to booked travel inventory items, and therefore, overlap with generated light ticketing document numbers for the low cost carrier may be avoided.

As discussed, the sequentially numbered portion resets back to the starting value of the defined range. In addition, by dedicating a portion of the light ticketing document number for sequentially numbering booked low cost travel inventory items, the reservation system 102 may avoid duplicate light ticketing document numbers being generated during a given time range (where such time range will be dependent on the number of low cost travel inventory items of the same type that are booked for a particular low cost carrier). In general, using a predefined format for light ticketing document numbers may facilitate sales and reservation tracking for a reservation agent and back office/accounting systems. In some embodiments, an indicator may be utilized in a back office/accounting system to identify light ticketing document numbers, and therefore transactions associated with low cost carriers. Therefore, consistent with these embodiments, reconciliation between transactions communicated with a billing and settlement plan (BSP) provider from a travel agency and total sales may be improved by providing back office/accounting system records for booked low cost travel inventory items. Moreover, based on the back office/accounting system records corresponding to low cost travel inventory items, payment reconciliation between a BSP provider and a travel agency may be improved due to the back office/accounting system records for booked low cost travel inventory items.

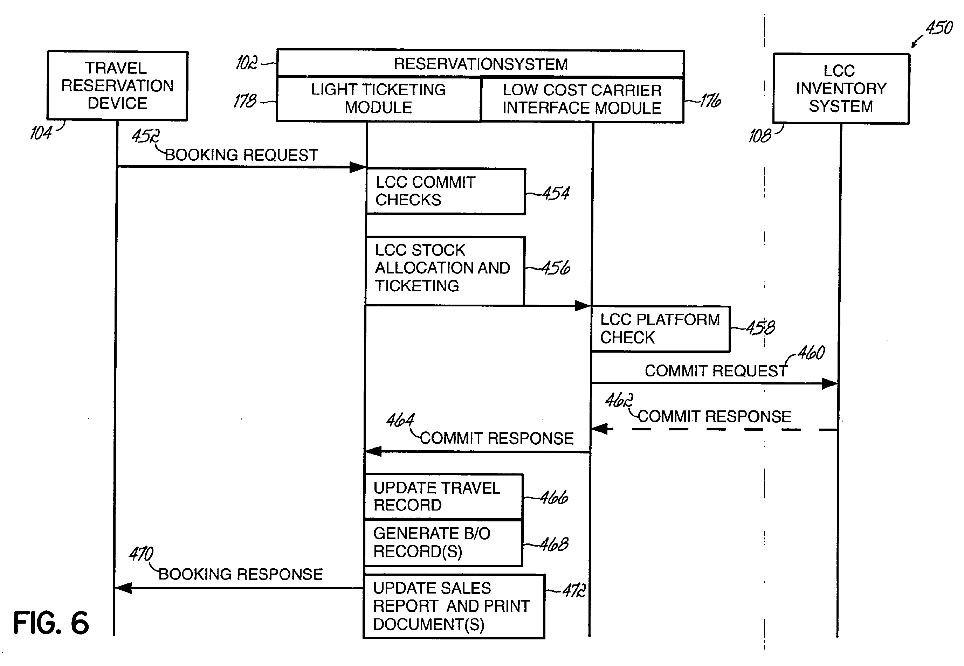

FIG. 6 provides an example routine 450 that may be performed by the reservation system 102, the travel reservation device 104, and the low cost carrier travel inventory system consistent with some embodiments of the invention to book a low cost travel inventory item in a booking transaction. A booking request may be communicated from the travel reservation device 104 to the reservation system 102 (block 452). As discussed, the booking request may indicate a particular PNR for which one or more travel inventory items are desired to be booked. In this example, the booking request may include at least one low cost travel inventory item requested to be booked for the PNR. In response to receiving the booking request, the reservation system 102 (executing the light ticketing module 178 with at least one processor) may analyze the booking request to determine whether the booking request includes a low cost travel inventory item, and the reservation system 102 may check the booking request to determine whether the information required by a low cost carrier (i.e., an LCC) associated with the low cost travel inventory item has been provided (block 454). As discussed, a low cost carrier inventory system 108 may require contact information and payment information to be provided concurrent with requesting the booking, which generally differs from standard inventory system booking procedures. Therefore, the reservation system 102 performs a commit check to determine whether the booking request includes the required information. If the booking request does not include the required information, the reservation system 102 may communicate a request to the travel reservation device 104 requesting the required information.

The reservation system 102 may analyze the stock allocation for the low cost carrier associated with the low cost travel inventory item to be booked and generate a light ticketing document number corresponding to the low cost travel inventory item (block 456). The reservation system 102 (executing the low cost carrier interface module 176) determines a correct interface platform for the low cost carrier inventory system 108 associated with the low cost travel inventory item (block 458). In general, different low cost travel inventory systems may be configured with different interface platforms, and embodiments of the invention may perform a platform check prior to communicating with a particular low cost carrier inventory system 108 to determine a formatting for transaction requests to be communicated to the particular low cost carrier inventory system 108 and a formatting of transaction responses expected to be received from the particular low cost carrier inventory system 108. For example, the reservation system 102 executing the low cost carrier interface module 176 may format a transaction request based at least in part on a schema (e.g., XML schema, HTML schema, etc.) of an interface platform associated with the particular low cost carrier inventory system. Similarly, transaction responses received from the particular low cost carrier inventory system 108 may be processed based at least in part on the associated interface platform.

Based at least in part on the interface platform of the low cost carrier inventory system 108 and the booking request, the reservation system communicates a commit request to the low cost carrier inventory system 108 associated with the low cost carrier inventory item to be booked (block 460). In this example, the reservation system 102 receives a commit response from the low cost carrier inventory system for the commit request (block 462). As discussed, the commit response may be processed according to the interface platform of the low cost carrier inventory system 108 (block 464). The commit response may indicate whether the low cost travel inventory item was successfully booked. In turn, in a low cost carrier inventory session, a successful booking indicates that a payment according to the payment information included in the commit request was also successful. The reservation system 102 updates a travel record associated with the PNR (block 466), and the reservation system 102 may generate one or more sales and/or reporting records associated with the booking transaction and the reservation agent (block 468). In general, such sales and/or reporting records may be referred to as interface records and/or back office records, where such interface records may include data corresponding to travel reservations booked by the reservation agent. Such interface records may be communicated to an accounting system (which may be referred to as a back office system) for tracking sales and reservation information for the reservation agent. In addition, the reservation system generates an indicator (e.g., an 'L' indicator that may be associated with the light ticketing document number) in the interface records/back office records to thereby differentiate between records for standard inventory items from low cost inventory items. The reservation system 102 may communicate a booking response to the travel reservation device 104 for the booking request (block 470). In addition, the reservation system 102 may update a sales report based at least in part on the booked low cost travel inventory item and one or more documents may be printed (block 472).

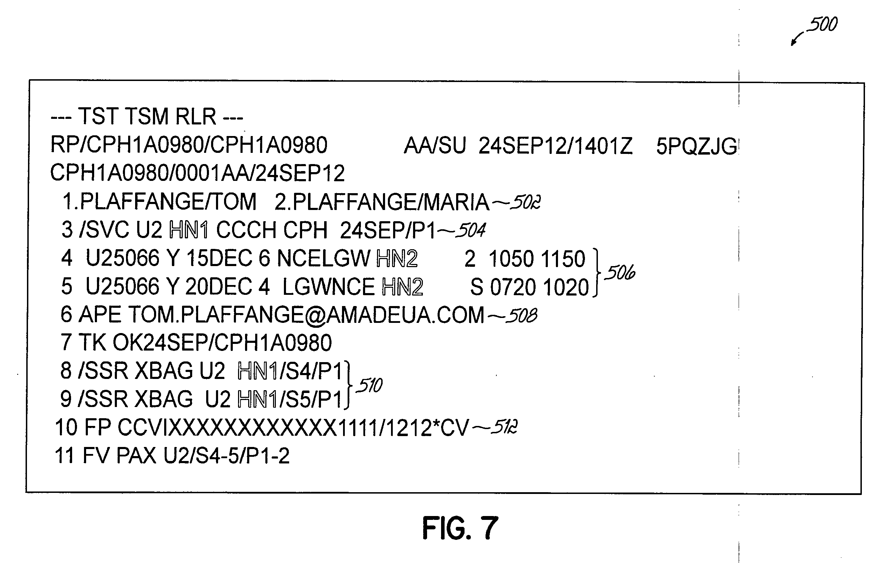

Turning now to FIG. 7, this figure provides an example PNR 500 may be associated with a booking request for booking a low cost travel inventory item prior to booking of the low cost travel inventory item consistent with embodiments of the invention. In this example, the PNR 500 includes two passenger names 502 associated with the booking request, data corresponding to fees that will be charged 504, data for flight segments corresponding to a low cost travel inventory item to be booked 506, contact information for the travel customer/passenger 508, data corresponding to ancillary services 510, and form of payment information 512. In this example, the requested segments 506 correspond to a flight from Nice, France (NCE) to London Gatwick Airport, United Kingdom (LGW) on December 15 and a return flight on December 20.

As should be noted, in some conventional systems, a reservation agent may interface with a low cost carrier inventory system 108 through a dedicated interface to book a low cost travel inventory item requested in the example PNR 500. However, a reservation system 102 consistent with embodiments of the invention may interface with a low cost carrier inventory system 108 such that booking a low cost travel inventory item may appear transparent to a reservation agent interfacing with the reservation system 102 using a travel reservation device 104. Consistent with these embodiments, the reservation agent may perform standard ticketing transactions with the reservation system 102 in a reservation session on a travel reservation device, and the reservation system 102 may dynamically interface with the low cost carrier inventory system 108 to book the low cost travel inventory item.

Moreover, in some conventional systems, upon booking a low cost travel inventory item (generally through a dedicated interface, such as a website), a PNR may be updated to update a booking status for a low cost travel inventory item. However, ticketing information and/or any back office reporting information may be unavailable for booked low cost travel inventory items. In contrast, consistent with embodiments of the invention, a reservation system 102 may update a PNR to include a light ticketing document number, update a booking status, and generate sales and/or back office reporting information and records upon a successful booking of a low cost travel inventory item, where such sales and back office reporting records may include an indicator that identifies the records as associated with low cost travel inventory items.

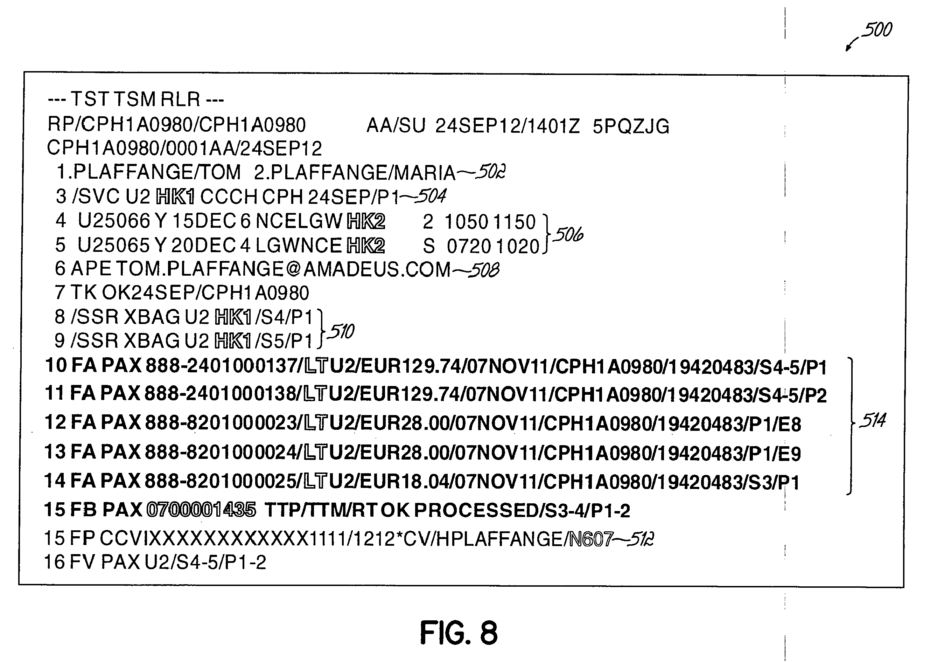

FIG. 8 provides the example PNR 500 of FIG. 6 after successful booking and ticket issuance by a reservation system 102 consistent with embodiments of the invention. A booking status for each segment 506 and each ancillary service 510 has been updated from needed/requested (i.e., 'HN' in FIG. 6) to confirmed (i.e., 'HK' in FIG. 7). As shown, ticketing information 514 has been added to the PNR 500 for each booked low cost travel inventory item (i.e., one for each passenger name 502) and each travel inventory item for an ancillary service. In particular, a light ticketing document number has been generated for the requested flights and services corresponding to the low cost travel inventory items. Particularly, for each flight, a light ticketing document number has been included in the ticketing information 514 of the PNR 500 ('888-240-1000137' and '888-2401000138'), and, for each ancillary service, a light ticketing document number ('888-8201000023', '888-8201000024', and '888-8201000025') has been included in the ticketing information 514 of the PNR 500. As illustrated by the example, each light ticketing document number includes a portion (i.e., '888') based at least in part on the low cost carrier/travel merchant associated with the low cost travel inventory items. Each light ticketing document number for each flight includes a portion (i.e., '240') based at least in part on the type of the low cost travel inventory item. Similarly, each ancillary service includes a portion ('820') based at least in part on the type of the low cost travel inventory item. Furthermore, as illustrated, each light ticketing document number includes a portion (i.e., the sequential numbered portions '000137' and '000138' for each flight and '000023', '000024, and '000025' for each ancillary service) based at least in part on a current stock allocation of the low cost carrier providing the booked low cost travel inventory item. In addition, the form of payment information 512 has been updated to include an approval code that indicates a successful payment for the bookings.

Consistent with some embodiments of the invention, the reservation system 102 may interface with a low cost carrier inventory system 108 to facilitate reissue of reservations for a travel record. As mentioned previously, the low cost carrier inventory system 108 may not communicate reservation documents (e.g., a carrier contract) to the reservation system 102 upon a successful booking. During a reissue transaction, the reservation system 102 may retrieve a PNR image corresponding to a time of the commit (or previous recommit), and the reservation system 102 may compare the PNR image with a current image of the PNR to identify changes (i.e., added, canceled, modified, changed, unchanged) and these changes may be communicated to the low cost carrier inventory system 108. Based on the changes received by the low cost carrier inventory system, the low cost carrier inventory system may update a corresponding reservation record stored therein. To track transactions, and therefore identify the appropriate PNR image at commit time, the reservation system 102 may store envelope numbers corresponding to different transactions processed between the reservation system 102 and the
low cost carrier inventory system 108. Consistent with these embodiments, the reservation system may store, in a transaction database, data corresponding to each transaction, including for example, a corresponding envelope number, a light ticketing document number, a transaction
type (e.g., commit, get booking status, recommit, etc.), and a status for the transaction (e.g., pending, confirmed, time out, etc.).

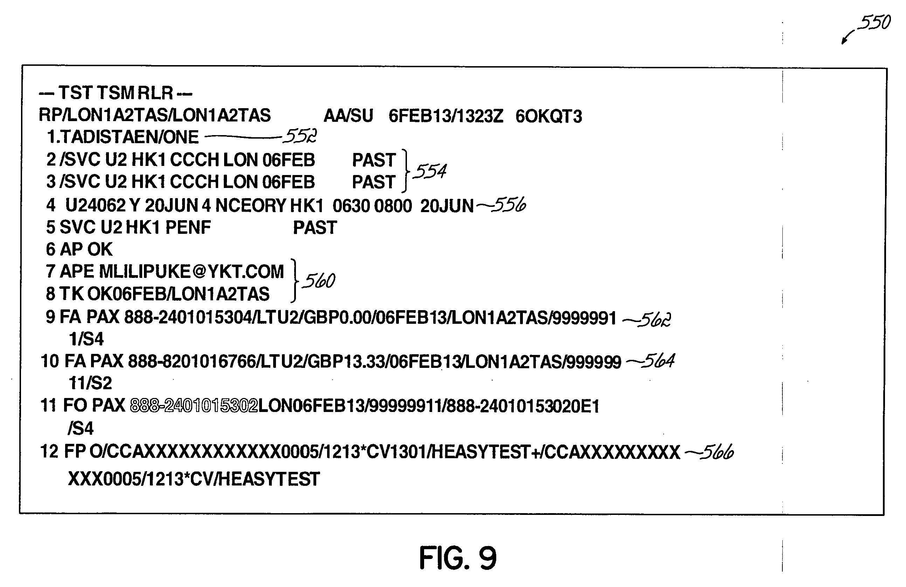

FIG. 9 provides an example PNR 550 for a reissue transaction for a low cost travel inventory item consistent with embodiments of the invention. In this example, the PNR 550 includes the passenger's name 552, fee information 554, flight segment information 556, penalty fee information 558 associated with a change, contact information 560, ticketing information for changed a changed segment and ancillary service 562, and ticketing information for a document needed for the exchange 564, and form of payment information for the current and previously used forms of payment 566. In general, the reservation system 102 may facilitate standard ticketing entries with the travel reservation device 104 to issue contract documents. In contrast, in conventional systems, such functionality was unavailable for low cost travel inventory item reissue using standard ticketing entries.

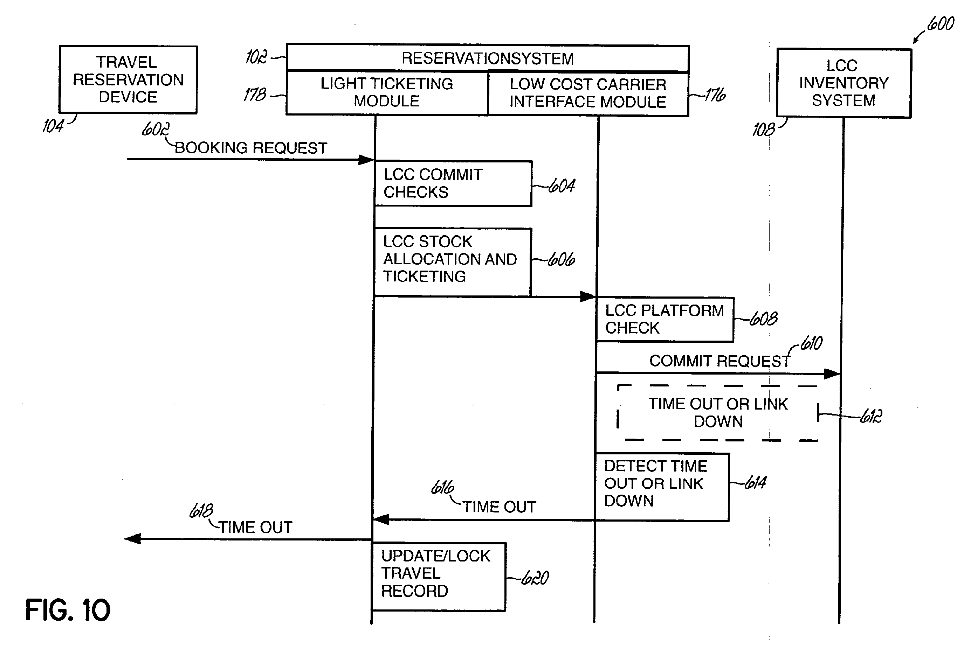

Turning now to FIG. 10, this figure provides an example routine 600 that may be performed by the reservation system 102, the travel reservation device 104, and the low cost carrier travel inventory system consistent with some embodiments of the invention during booking of a low cost travel inventory item. A booking request may be communicated from the travel reservation device 104 to the reservation system 102 (block 602). The reservation system 102 (executing the light ticketing module 178 with at least one processor) performs a low cost carrier commit check (block 604), and in this example, assuming all required information is provided, the reservation system 102 generates a light ticketing document number corresponding to the low cost travel inventory item (block 606). The reservation system 102 (executing the low cost carrier interface module 176 with at least one processor) determines the interface platform for the low cost carrier inventory system 108 associated with the low cost travel inventory item (block 608), and the reservation system 102 communicates a commit request for the low cost travel inventory item (block 610) to the low cost carrier inventory system 108.

In this example, a problem (i.e., a connection time out or down link) occurs such that a commit response is not received at the reservation system 102 (block 612). The reservation system 102 detects the problem based on a time limit or other such connection metric (blocks 614-616). In response to detecting the time out, the reservation system 102 communicates an error message to the travel reservation device 104 (block 618), and the reservation system 102 updates the travel record (e.g., PNR) with a tracking number and locks the travel record (block 620). In some embodiments, locking the travel record comprises inserting a tracking number as an FN element.

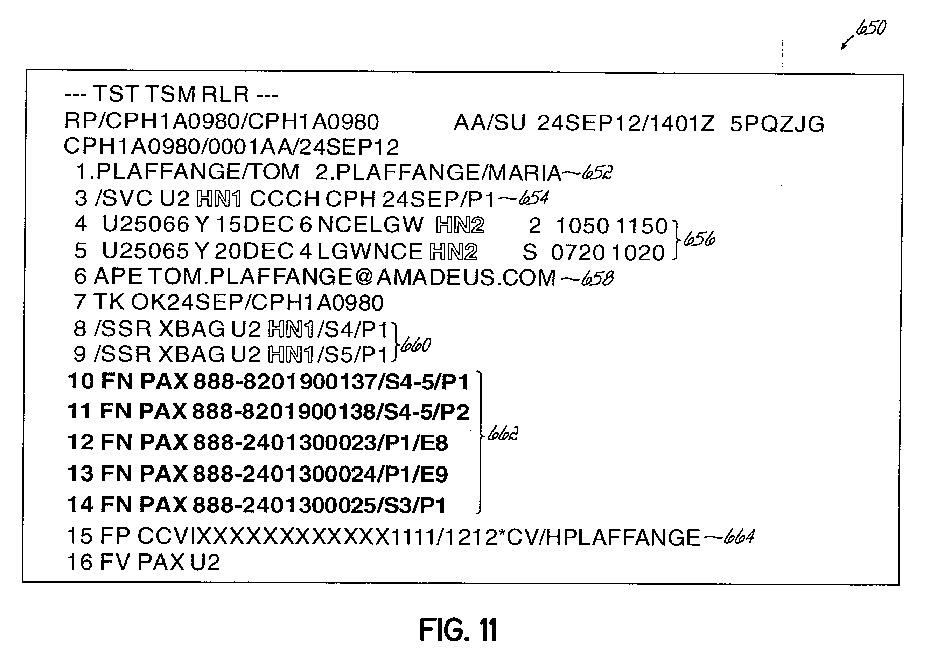

FIG. 11 provides an example PNR 650 updated after a time out or link down as described above. In this example, the PNR 650 includes passenger information 652, fee information 654, segments corresponding to a low cost travel inventory item 656, contact information 658, ancillary service information 660, tracking numbers 662 associated with low cost travel inventory items that were requested, and form of payment information 664. As shown, the status of the segments 656 and ancillary service information 660 are needed ('HN') because a response has not been received from the low cost carrier inventory system 108. In addition, the tracking numbers 662 may be used to recover (i.e., check the booking status) at a later time. In contrast, in some conventional systems, an error would be output responsive to a problem, and recovery would not be possible.

In general, the routines executed to implement the embodiments of the invention, whether implemented as part of an operating system or a specific application, component, program, object, module or sequence of operations and/or instructions, or even a subset thereof, will be referred to herein as "computer program code," or simply "program code." Program code typically comprises one or more instructions that are resident at various times in various memory and storage devices in a computer, and that, when read and executed by one or more processors in a computer, cause that computer to perform the steps necessary to execute steps or elements embodying the various aspects of the invention. Moreover, while the invention has and hereinafter will be described in the context of fully functioning computers and computer systems, those skilled in the art will appreciate that the various embodiments of the invention are capable of being distributed as a program product in a variety of forms, and that the invention applies equally regardless of the particular type of computer readable media used to actually carry out the distribution.

The program code embodied in any of the applications, modules, sequences of operations, and/or components described herein is capable of being individually or collectively distributed as a program product in a variety of different forms. In particular, the program code may be distributed using a computer readable media, which may include computer readable storage media and communication media. Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Communication media may embody computer readable instructions, data structures or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

These computer program instructions may also be stored in a computer readable medium that can direct a computer, other types of programmable data processing apparatus, or other devices to function in a particular manner, such that the instructions stored in the computer readable medium produce an article of manufacture including instructions that implement the function/act specified in the block or blocks of the flowchart and/or block diagram.

The computer program instructions may also be loaded onto a computer, other programmable data processing apparatus, or another device to cause a series of computations to be performed on the computer, the other processing apparatus, or the other device to produce a computer implemented process such that the executed instructions provide one or more processes for implementing the functions/acts specified in the flowchart and/or block diagram block or blocks.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising."

In summary, the reservation system described herein may be identified by the following aspects:
1. A reservation system comprising:
   at least one processor; and
   program code configured to be executed by the at least one processor and upon execution to cause the at least one processor to:
      receive a booking request associated with a passenger name record from a travel reservation device at the reservation system;
      responsive to determining that the booking request corresponds to a travel inventory item of a low cost carrier, generate a light ticketing document number associated with the travel inventory item based at least in part on an identity of the low cost carrier and a type associated with the travel inventory item;
      communicate a transaction request for the travel inventory item to an inventory system for the low cost carrier, the transaction request including form of payment information and contact information; and
      responsive to a transaction response received from the inventory system for the low cost carrier indicating a successful booking and a successful payment for the travel
   inventory item, update the passenger name record to include a confirmed booking for the travel inventory item including the light ticketing document number.
2. The reservation system of aspect 1, wherein the program code is further configured upon execution to cause the processor to:
   responsive to not receiving a transaction response from the inventory system for the low cost carrier at the reservation system, update the passenger name record to indicate that a transaction was initiated and not completed, update the passenger name record to include the light ticketing document number, and lock the passenger name record such that only a get booking status request corresponding to the travel inventory item may be communicated to the inventory system of the low cost carrier for the passenger name record.
3. The reservation system of aspects 1 or 2, wherein the program code is further configured upon execution to cause the processor to:
   generate an interface record for a reservation agent associated with the booking request based at least in part on the confirmed booking and including the light ticketing document number, and
   communicate the interface record to an accounting system associated with the reservation agent.
4. The reservation system of any of aspects 1 to 3, wherein the program code being configured upon execution to generate the light ticketing document number associated with the travel inventory item based at least in part on the low cost carrier and the type associated with the travel inventory item comprises:
   the program code being configured upon execution to cause the processor to select a first subset of numbers of the light ticketing document number based at least in part on the identity of
      the low cost carrier, and select a second subset of numbers of the light ticketing document number based at least on part on the type associated with the travel inventory item.
5. The reservation system of any of aspects 1 to 4, wherein the program code is further configured upon execution to cause the processor to:
   determine an interface platform associated with the inventory system of the low cost carrier prior to communicating the transaction request, and generate the transaction request based at least in part on the booking request and the interface platform associated with the inventory system of the low cost carrier.
6. The reservation system of any of aspects 1 to 5, wherein the program code is further configured upon execution to cause the processor to:
   communicate a confirmation to the travel reservation device indicating the confirmed booking and the successful payment responsive to updating the passenger name record associated with the booking request.
7. The reservation system of any of aspects 1 to 6, wherein the light ticketing document number is stored in a ticket number element associated with the confirmed booking.
8. The reservation system of any of aspects 1 to 7, wherein the program code is further configured upon execution to cause the processor to:
   determine changes between the passenger name record and a previous image of the passenger name record that corresponds to booking the travel inventory item prior to communicating a reissue request to the inventory system of the low cost carrier corresponding to the travel inventory item, and
   communicate a transaction request for a reissue corresponding to the travel inventory item that includes the determined changes.
9. The reservation system of aspect 8, wherein the program code is further configured upon execution to cause the processor to:
   identify the previous image of the passenger name record that corresponds to booking the travel inventory item based at least in part on an envelope number associated with the received transaction response.
10. The reservation system of any of aspects 1 to 9, wherein the transaction response is a first transaction response and the program code is further configured upon execution to cause the processorto:
   in response to a second transaction response received from the inventory system for the low cost carrier indicating that booking was not successful for the travel inventory item, communicating an error message to the travel reservation device.

While all of the present invention has been illustrated by a description of various embodiments and while these embodiments have been described in considerable detail, it is not the intention of the applicants to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the applicant's general inventive concept.

## Claims

1. A method for managing low cost carrier travel inventory items, the method comprising:
receiving a booking request associated with a passenger name record from a travel reservation device at a reservation system;
in response to determining that the booking request corresponds to a travel inventory item of a low cost carrier, generating, with at least one processor of the reservation system, a light ticketing document number associated with the travel inventory item based at least in part on an identity of the low cost carrier and a type associated with the travel inventory item;
communicating a transaction request for the travel inventory item to an inventory system for the low cost carrier, the transaction request including form of payment information and contact information; and
in response to receiving a transaction response from the inventory system for the low cost carrier indicating a successful booking and a successful payment for the travel inventory item, updating, with the at least one processor, the passenger name record to include a confirmed booking for the travel inventory item including the light ticketing document number.

2. The method of claim 1, further comprising:
in response to not receiving a transaction response from the inventory system for the low cost carrier at the reservation system:
updating, with the at least one processor, the passenger name record to indicate that a transaction was initiated and not completed;
updating the passenger name record to include the light ticketing document number; and
locking the passenger name record such that only a get booking status request corresponding to the travel inventory item may be communicated to the inventory system of the low cost carrier for the passenger name record.

3. The method of claim 1 or claim 2, further comprising:
generating an interface record for a reservation agent associated with the booking request based at least in part on the confirmed booking and including the light ticketing document number; and
communicating the interface record to an accounting system associated with the reservation agent.

4. The method of any of claims 1 to 3, wherein generating, with the at least one processor of the reservation system, the light ticketing document number associated with the travel inventory item based at least in part on the low cost carrier and the type associated with the travel inventory item comprises:
selecting a first subset of numbers of the light ticketing document number based at least in part on the identity of the low cost carrier; and
selecting a second subset of numbers of the light ticketing document number based at least on part on the type associated with the travel inventory item.

5. The method of any of claims 1 to 4, further comprising:
prior to communicating the transaction request, determining an interface platform associated with the inventory system of the low cost carrier; and
generating the transaction request based at least in part on the booking request and the interface platform associated with the inventory system of the low cost carrier.

6. The method of any of claims 1 to 5, further comprising:
in response to updating the passenger name record associated with the booking request, communicating a confirmation to the travel reservation device indicating the confirmed booking and the successful payment.

7. The method of any of claims 1 to 6, wherein the light ticketing document number is stored in a ticket number element associated with the confirmed booking.

8. The method of any of claims 1 to 7, the method further comprising:
prior to communicating a reissue request to the inventory system of the low cost carrier corresponding to the travel inventory item, determining changes between the passenger name record and a previous image of the passenger name record that corresponds to booking the travel inventory item; and
communicating a transaction request for a reissue corresponding to the travel inventory item that includes the determined changes.

9. The method of claim 8, further comprising:
identifying the previous image of the passenger name record that corresponds to booking the travel inventory item based at least in part on an envelope number associated with the received transaction response.

10. The method of any of claims 1 to 9, wherein the transaction response is a first transaction response, the method further comprising:
in response to a second transaction response received from the inventory system for the low cost carrier indicating that booking was not successful for the travel inventory item, communicating an error message to the travel reservation device.

11. A reservation system comprising:
at least one processor; and
program code configured to be executed by the at least one processor and upon execution to cause the at least one processor to:
receive a booking request associated with a passenger name record from a travel reservation device at the reservation system;
responsive to determining that the booking request corresponds to a travel inventory item of a low cost carrier, generate a light ticketing document number associated with the travel inventory item based at least in part on an identity of the low cost carrier and a type associated with the travel inventory item;
communicate a transaction request for the travel inventory item to an inventory system for the low cost carrier, the transaction request including form of payment information and contact information; and
responsive to a transaction response received from the inventory system for the low cost carrier indicating a successful booking and a successful payment for the travel
inventory item, update the passenger name record to include a confirmed booking for the travel inventory item including the light ticketing document number.

12. The reservation system of claim 11, wherein the program code is further configured upon execution to cause the processor to:
responsive to not receiving a transaction response from the inventory system for the low cost carrier at the reservation system, update the passenger name record to indicate that a transaction was initiated and not completed, update the passenger name record to include the light ticketing document number, and lock the passenger name record such that only a get booking status request corresponding to the travel inventory item may be communicated to the inventory system of the low cost carrier for the passenger name record.

13. The reservation system of claim 11 or claim 12, wherein the program code is further configured upon execution to cause the processor to:
generate an interface record for a reservation agent associated with the booking request based at least in part on the confirmed booking and including the light ticketing document number, and
communicate the interface record to an accounting system associated with the reservation agent.

14. The reservation system of any of claims 11 to 13, wherein the program code being configured upon execution to generate the light ticketing document number associated with the travel inventory item based at least in part on the low cost carrier and the type associated with the travel inventory item comprises:
the program code being configured upon execution to cause the processor to select a first subset of numbers of the light ticketing document number based at least in part on the identity of the low cost carrier, and select a second subset of numbers of the light ticketing document number based at least on part on the type associated with the travel inventory item.

15. A program product comprising:
a computer readable storage medium; and
program code stored on the computer readable storage medium and configured, upon execution, to cause at least one processor to:
receive a booking request associated with a passenger name record from a travel reservation device at a reservation system;
responsive to determining that the booking request corresponds to a travel inventory item of a low cost carrier, generate a light ticketing document number associated with the travel inventory item based at least in part on an identity of the low cost carrier and a type associated with the travel inventory item;
communicate a transaction request for the travel inventory item to an inventory system for the low cost carrier, the transaction request including form of payment information and contact information; and
responsive to a transaction response received from the inventory system for the low cost carrier indicating a successful booking and a successful payment for the travel inventory item, update the passenger name record to include a confirmed booking for the travel inventory item including the light ticketing document number.
